# EUROPÄISCHE PATENTSCHRIFT

(11) **EP 3 914 494 B1**
(45) Veröffentlichungstag und Bekanntmachung des Hinweises auf die Patenterteilung: **28.09.2022**
(21) Anmeldenummer: 20701928.2
(22) Anmeldetag: 16.01.2020
(51) Int. Cl.: B60W 30/12, B60W 50/14, B60W 50/16, B60W 50/02, B60W 60/00, B60W 50/029

(54) **VERFAHREN ZUM BETRIEB EINES SPURFÜHRUNGSSYSTEMS UND SPURFÜHRUNGSSYSTEM**
METHOD FOR OPERATING A LANE GUIDANCE SYSTEM, AND LANE GUIDANCE SYSTEM
PROCÉDÉ PERMETTANT DE FAIRE FONCTIONNER UN SYSTÈME DE GUIDAGE SUR UNE VOIE ET SYSTÈME DE GUIDAGE SUR UNE VOIE

(30) Priorität: 22.01.2019 DE 102019000461
(43) Veröffentlichungstag der Anmeldung: 01.12.2021
(73) Patentinhaber: Mercedes-Benz Group AG, 70372 Stuttgart (DE)
(72) Erfinder: HERGET, Constantin, 70195 Stuttgart (DE); DICK, Markus, 71263 Weil der Stadt (DE); KLINGEL, Ralph, 71299 Wimsheim (DE)
(74) Vertreter: JENSEN & SON
(86) Internationale Anmeldenummer: PCT/EP2020/051068
(87) Internationale Veröffentlichungsnummer: WO 2020/152030

(56) Entgegenhaltungen:
- DE-A1-102013 009 423
- US-A1- 2018 345 964
- US-B1- 9 475 521

## Beschreibung

Die vorliegende Erfindung betrifft ein Verfahren zum Betrieb eines Spurführungssystems und ein zugehöriges Spurführungssystem eines Fahrzeugs.

Moderne Kraftfahrzeuge verfügen über Spurführungssystem die zum selbstständigen Lenken eines Fahrzeugs eingerichtet sind, wobei in vielen Fahrsituation die Bereitschaft eines Nutzers zur Übernahme der Fahrzeugsteuerung an einer Lenkhandhabe erforderlich ist. Ist bei einem aktiven Spurführungssystem eine Nutzerberührung der Lenkhandhabe innerhalb einem vorgegebenen Zeitfenster nicht detektierbar, dann wird das Spurführungssystem deaktiviert und bei Berührung wieder aktiviert.

Aus der US 2010/0185341 A1 ist bekannt, mit einem im Lenkrad angeordneten Sensor eine Bereitschaft eines Nutzers am Lenkrad durch Detektion einer Berührung zu ermitteln.

Die DE 10 2010 022 433 A1 offenbart ein Verfahren, bei dem ein Hinweis eine Steuerung des Fahrzeugs zu übernehmen an einen Fahrer ausgegeben wird. Für den Fall, dass keine Fahrerübernahme erkannt wird, erfolgt eine Abschaltung des automatischen arbeitenden Assistenzsystems bei gleichzeitiger Aktivierung der Warnblinkanlage.

Die US 9 475 521 B1 offenbart einen Spurhalteassistenten, bei welchem eine Fehlfunktion der Berührungssensoren am Lenkrad ermittelt werden kann und daraufhin damit assoziierte Assistenzsysteme ausgeschaltet bzw. gesperrt werden. Die Fehlfunktion der Berührungssensoren wird mit Hilfe von Drehmoment- oder Lenkwinkelsensoren verifiziert. Durch Auswertung der Signale der Berührungssensoren und der Drehmoment- oder Lenkwinkelsensoren wird ermittelt, ob ein fehlendes Signal der Berührungssensoren durch eine Fehlfunktion oder durch ein Nichtberühren des Fahrers hervorgerufen wird.

Die DE 10 2013 009423 A1 offenbart ein Verfahren zum Betrieb eines Fahrzeugspurführungssystems mit einer Lenkhandhabe umfassend einen berührungssensitiven Sensor, mittels dem eine Hands-Off Situation des Fahrers erkennbar ist. Im Fall einer Hand-Off-Erkennung wird nach einer vorgegebenen Zeit eine Warnung ausgegeben und gegebenenfalls eine Warnungseskalation eingeleitet, falls keine Reaktion auf die Warnung erfolgt.

Ist ein Sensor defekt liefert dieser kein Sensorsignal und das Ausbleiben des Sensorsignals wird als fehlende Bereitschaft des Fahrzeugnutzers zur Fahrzeugsteuerung interpretiert.

Es ist demgemäß die Aufgabe der vorliegenden Erfindung ein Verfahren zum Betrieb eines Spurführungssystems und ein Spurführungssystem zur Verfügung zu stellen, welche einen sichereren Betrieb des Spurführungssystems ermöglichen.

Die Aufgabe wird durch ein Verfahren zum Betrieb eines Spurführungssystems mit den Merkmalen des Anspruchs 1 sowie einem Spurführungssystem gemäß Anspruch 8 gelöst.

Weitere vorteilhafte Ausgestaltungen der vorliegenden Erfindung sind Gegenstand der abhängigen Ansprüche.

Bei dem erfindungsgemäßen Verfahren zum Betrieb eines Spurführungssystems mit einer Lenkhandhabe umfassend einen berührungssensitiven Sensor werden folgende Schritte ausgeführt:
- Bestimmung einer Zeitdauer vom Zeitpunkt einer Aufforderung des Spurführungssystems an einen Fahrzeugnutzer zur Berührung der Lenkhandhabe bis zum Auftreten eines durch eine Berührung der Lenkhandhabe im Sensorbereich bewirkten Sensorsignals und Vergleich mit einem vorgegebenen Zeitfenster,
- Sperrung einer Aktivierungsmöglichkeit des Spurführungssystems für den Fall, dass die bestimmte Zeitdauer größer als das vorgegebenen Zeitfenster ist,
wobei das Spurführungssystem bei einer erstmaligen Aufforderung zur Berührung der Lenkhandhabe nach einem Ruhezustand bis zu einem folgenden Ruhezustand gesperrt wird.

Das Spurführungssystem ist eingerichtet selbstständig zu lenken, hierfür umfasst das Spurführungssystem gemäß dem Stand der Technik beispielsweise Umfeldsensoren wie Kamera, Radar, Lidar zur Erfassung der Umgebung und des Straßenverlaufs, eine Recheneinheit zur Datenauswertung und Aktoren zur Ansteuerung des Lenksystems. Bevorzugt ist das Spurführungssystem mit einem Längsregelsystem gekoppelt, so dass ein autonomer oder teilautonomer Fahrbetrieb realisiert werden kann. Je nach Automatisierungsstufe des Fahrbetriebs muss beispielsweise nach einer vorbestimmten Zeitdauer oder vor bzw. mit Erreichen einer Systemgrenze der Nutzer insbesondere die Lenkaufgabe beziehungsweise die Fahraufgabe umfassend Längs- und Querregelung übernehmen. Die Systemgrenze gibt vor, bis wann autonom oder teilautonom gefahren werden kann. Beispielsweise bei fehlenden Linien zur Kennzeichnung des Straßenrandes, bei starken Niederschlägen oder bei komplexer Verkehrsführung in Baustellenbereichen ist ein autonomes oder teilautonomes Fahren nicht mehr möglich.

Mit Ergreifen der Lenkhandhabe erkennt ein Sensor, dass der Nutzer das Lenken des Fahrzeugs übernimmt. Wird erkannt, dass der Fahrer die Lenkaufgabe nicht übernimmt, muss von gesundheitlicher Beeinträchtigung des Fahrers ausgegangen und bevorzugt ein Nothalt des Fahrzeugs eingeleitet werden. Ist der Sensor defekt oder fährt der Nutzer mit Handschuhen, kann in einer Übernahmesituation aus einem autonomen Fahrbetrieb ein Ergreifen der Lenkhandhabe durch den Nutzer nicht erkannt werden, so dass ungewollt der Nothalt ausgeführt werden würde. Unter dem Begriff Sensor sind im Sinne der Anmeldung neben dem Sensor selbst die zugehörigen Komponenten zur Übermittlung und Auswertung eines Sensorsignals, d.h. die Verkabelung, die Auswerteeinheit etc. zu verstehen. Das erfindungsgemäße Verfahren vermeidet diesen für diese Situation überflüssigen Nothalt, indem unmittelbar nach einem Ruhezustand des Fahrzeugs eine Initialisierung, d.h. eine Überprüfung der Funktionsfähigkeit des Sensors durchgeführt und erst nach bestätigter Funktionsfähigkeit des Sensors das Spurführungssystem aktivierbar ist. Gleichzeitig wird eine korrekt arbeitende Sensoreinheit zur Erfassung der Berührung durch den Fahrer gewährleistet.

Eine Betriebsbereitschaft des Spurführungssystems ist im Sinne der vorliegenden Anmeldung beispielsweise gegeben, sobald der Nutzer das Spurführungssystem durch Einschalten angefordert hat und alle Bedingungen für die Funktion des Spurführungssystems erfüllt sind, die Betriebsbereitschaft wird durch ein Symbol wie beispielsweise ein Lenkrad-Icon angezeigt. Die Bedingungen für eine Funktion des Spurführungssystems setzen beispielsweise voraus, dass die Umfeldsensorik zuverlässig Straßenbegrenzungen erfasst, das Fahrzeug in einem zulässigen Geschwindigkeitsbereich fährt oder die Lenkaktoren funktionsfähig sind.

Für den Fall, dass die bestimmte Zeitdauer ab dem Zeitpunkt der Aufforderung an einen Fahrzeugnutzer zur Berührung der Lenkhandhabe bis zur Erkennung des durch die Berührung bewirkten Sensorsignals größer als das vorgegebene Zeitfenster ist, erfolgt keine Aktivierungsmöglichkeit des Spurführungssystems bis zum nächsten Ruhezustand bzw. bis zu einem Wecken aus dem Ruhezustand. Der Ruhezustand des Spurhaltesystems geht mit einem Ruhezustand des Fahrzeugs einher, bei Verbrennungsfahrzeugen wird der Ruhezustand durch Beendigung eines Zündungslaufs erreicht, d.h. der Ruhezustand ist nach Abschalten von Klemme 15 bevorzugt inklusive Nachlauf erreicht. Bei Elektrofahrzeugen wäre der Ruhezustand beispielsweise charakterisiert durch Abschaltung bzw. durch in einen Schlafmodus versetzte Steuergeräte von zumindest der Antriebseinrichtung und/oder des Bordnetzes analog Abschaltung von Klemme 15. Das Spurführungssystem bleibt abgeschaltet bzw. eine Aktivierungsmöglichkeit ist gesperrt bis zum nächsten Ruhezustand und ist bis dahin nicht mehr verfügbar, der Nutzer erhält eine Information über ein Systemdefekt. Durch das Verfahren wird in vorteilhafter Weise vermieden, dass bei Erreichen der Betriebsbereitschaft, d.h. das Spurführungssystem ist vom Nutzer angefordert und Bedingungen zum Betrieb sind erfüllt, bei Ausbleiben eines Sensorsignals, beispielsweise aufgrund eines Defekts, ein Nothalt eingeleitet und eine damit verbundene Verunsicherung des Nutzers ausgelöst wird.

Gemäß einer Ausführungsform erfolgt für den Fall, dass die bestimmte Zeitdauer ab dem Zeitpunkt der Aufforderung an einen Fahrzeugnutzer zur Berührung der Lenkhandhabe bis zur Erkennung des durch die Berührung bewirkten Sensorsignals kleiner als das vorgegebene Zeitfenster ist, d.h. das Auftreten des Sensorsignals innerhalb dem vorgegebenen Zeitfenster detektiert wird, eine Freigabe einer Aktivierung des Spurführungssystems. Mit anderen Worten ist in dem Fall die Initialisierung der Sensoren erfolgreich. Mit der erfolgreichen Initialisierung wird das Spurführungssystem aktiviert sobald Betriebsbereitschaft gegeben ist. Das aktivierte Spurführungssystem lenkt selbstständig, die Funktion wird beispielsweise durch ein grünes Lenkradicon dargestellt. Ist die Aktivierung des Spurführungssystems einmal freigegeben, dann ist die Funktion der Sensoren nachgewiesen und das Spurführungssystem kann damit nach einer Deaktivierung jederzeit wieder aktiviert werden. Wird das Spurführungssystem beispielsweise aufgrund nicht erfüllter Bedingungen deaktiviert, so ist dieses jederzeit aktivierbar, sobald die Bedingungen wieder erfüllt sind. Wird das Spurführungssystem beispielsweise aufgrund fehlender Fahrbahnmarkierungen deaktiviert, kann ein Nutzer durch Anforderung das Spurführungssystem wieder aktivieren, sobald die Fahrbahnmarkierungen wieder vorhanden sind.

Gemäß einer weiteren Ausführungsform der Erfindung erfolgt die Aufforderung zur Berührung der Lenkhandhabe mit Eintreten einer Betriebsbereitschaft des Spurführungssystems. Sobald das Spurführungssystem betriebsbereit ist, d.h. alle Bedingungen für die Funktion des Spurführungssystems sind erfüllt und der Nutzer hat die Systemfunktion angefordert, erfolgt die Aufforderung zur Berührung der Lenkhandhabe. Die Initialisierung erfolgt damit, sobald der Nutzer nach einem Ruhezustand des Fahrzeugs erstmalig mit Unterstützung des Spurführungssystems fahren will. In vorteilhafter Weise erfolgt die Überprüfung der Sensoren nur, wenn der Nutzer die Unterstützung des Spurführungssystems anfordert.

Gemäß einer Ausgestaltung der vorliegenden Erfindung wird ein Fahrzeugnutzer optisch, akustisch und/oder haptisch aufgefordert die Lenkhandhabe im Sensorbereich zu berühren. Mit anderen Worten wird der Nutzer aufgefordert, nach jedem Ruhezustand des Fahrzeugs eine Prüfung der Sensorfunktion zu bewirken, wodurch überflüssige Nothaltmanöver vermieden sind.

Gemäß einer weiteren Ausgestaltung der vorliegenden Erfindung wird mit Ausbleiben einer Berührung nach einer vorgegebenen Zeitdauer nach einer Aufforderung zur Berührung der Lenkhandhabe der Fahrzeugnutzer erneut optisch, akustisch und/oder haptisch bevorzugt mit einer erhöhten Intensität aufgefordert die Lenkhandhabe im Sensorbereich zu berühren. Die erneute Aufforderung vor Sperrung der Aktivierungsmöglichkeit lenkt verstärkt die Aufmerksamkeit des Nutzers auf die Anzeige und bewegt den Nutzer zur Berührung des Sensors, so dass die Zeitdauer vom Zeitpunkt einer Aufforderung des Spurführungssystems bis zum Auftreten eines durch eine Berührung der Lenkhandhabe im Sensorbereich bewirkten Sensorsignals kleiner als das vorgegeben Zeitfenster ist.

Gemäß einer weiteren Ausgestaltung umfasst die Berührung der Lenkhandhabe eine Annäherung eines Bedienelements und folgende Berührung des Lenkrads. Gemäß dieser Ausgestaltung wird nur ein Sensorsignal als gültig erkannt, das durch ein Berühren eines vorher nicht berührten Sensors bewirkt wird. Als Betätigung wird nur ein durch eine annähernde Hand mit folgender Berührung bewirktes Signal als gültiges Signal erkannt, beispielsweise ein mit positiver Flanke beginnendes Sensorsignal. In vorteilhafter Weise wird verhindert, dass ein durch Entfernung einer Hand vom Lenkrad bewirktes Sensorsignal zur Aktivierung des Spurführungssystems führt.

Gemäß einer weiteren Ausgestaltung der vorliegenden Erfindung wird der Fahrzeugnutzer über die Sperrung der Aktivierungsmöglichkeit des Spurführungssystems bis zum folgenden Ruhezustand mittels einer optisch, akustisch und/oder haptischen Anzeige informiert, bevorzugt wird der Nutzer über einen möglichen technischen Defekt des Sensors informiert.

Die erfindungsgemäße Vorrichtung umfasst ein Spurführungssystem mit einem an einer Lenkhandhabe angeordneten berührungssensitiven Sensor,
einer Recheneinheit, die eine Zeitdauer von einer Aufforderung des Spurführungssystems an einen Fahrzeugnutzer zur Berührung der Lenkhandhabe bis zum Auftreten des durch eine Berührung bewirkten Sensorsignals ermittelt und mit einem vorgegebenen Zeitfenster vergleicht, wobei
die Recheneinheit eine Aktivierungsmöglichkeit des Spurführungssystems sperrt für den Fall, dass die bestimmt Zeitdauer größer als das vorgegebene Zeitfenster ist, wobei die Aktivierungsmöglichkeit des Spurführungssystems bei einer erstmaligen Aufforderung zur Berührung der Lenkhandhabe nach einem Ruhezustand bis zu einem nachfolgenden Ruhezustand des Fahrzeugs gesperrt bleibt. In vorteilhafter Weise vermeidet das Spurführungssystem, dass bei Ausbleiben eines Sensorsignals nach Aufforderung an einen Nutzer, beispielsweise aufgrund eines Sensordefekts oder einer Bedienung mit Handschuhen, die Einleitung eines Nothaltemanövers vermieden ist.

Gemäß einer weiteren Ausgestaltung der vorliegenden Erfindung ist der Sensor als ein kapazitiver, induktiver, resistiver oder als optischer Sensor ausgeführt ist. Die Sensoren ermöglichen eine zuverlässige Erkennung einer Berührung durch eine Hand.

Die vorliegende Erfindung wird nachstehend anhand von Ausführungsbeispielen unter Bezugnahme auf die beiliegende Zeichnung näher erläutert, in der gleiche oder ähnliche Teile mit gleichen Bezugszeichen bezeichnet sind.

Es zeigt:
Fig. 1 eine schematische Ansicht eines Fahrzeuginnenraums;
Fig. 2 eine Darstellung eines Funktionsablaufs des erfindungsgemäßen Verfahrens;
Fig. 3 eine weitere Darstellung eines Funktionsablaufs des erfindungsgemäßen Verfahrens;
Fig. 4 eine weitere Darstellung eines Funktionsablaufs des erfindungsgemäßen Verfahrens und
Fig. 5 ein Ablaufdiagramm des erfindungsgemäßen Verfahrens.

Bevor detailliert die Ausführungsbeispiele der vorliegenden Erfindung beschrieben werden, wird ein in allen nachstehend erläuterten Ausführungsbeispielen der vorliegenden Erfindung verwendeter Aufbau beschrieben.

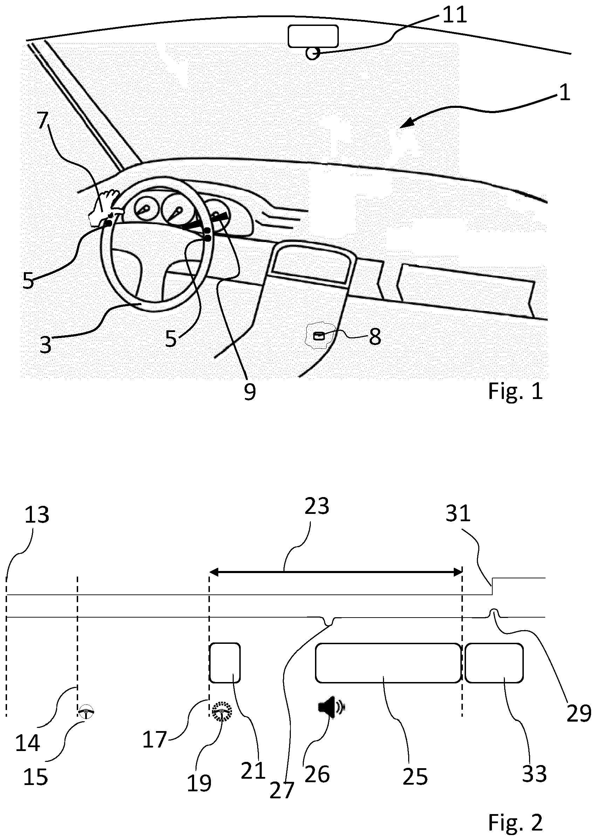

In Fig. 1 ist ein Fahrzeuginnenraum 1 gezeigt, der einem Fahrzeug mit einem Spurführungssystem zugehörig ist. Das Spurführungssystem umfasst ein als Lenkrad 3 ausgeführte Lenkhandhabe mit beidseitig angeordneten Sensoren 5 zur Bestimmung einer von beispielsweise einer Hand 7 bewirkten Nutzerberührung. Mittels einem Hebel 9 ist das Spurführungssystem einschaltbar. Einschalten bedeutet mit anderen Worten, dass eine automatische Lenkfunktion angefordert wird, die eigentliche Aktivierung des automatischen Lenkens erfolgt gegebenenfalls erst mit Erfüllung weiterer Bedingungen. Sobald das Spurführungssystem, d.h. die automatische Lenkfunktion aktiviert ist folgt das Fahrzeug automatisiert, d.h. ohne weitere Lenkeingriffe des Nutzers dem mit einer Kamera 11 erfassten Straßenverlauf. Kann die Kamera 11 den Fahrspurverlauf beispielsweise in einer Baustelle nicht mehr zuverlässig bestimmen, dann wird der Nutzer aufgefordert die Lenkaufgabe zu übernehmen. Mit Ergreifen des Lenkrads 3 durch die Hand 7 erkennen die Sensoren 5, d.h. zumindest einer der Sensoren 5, die Übernahme der Fahraufgabe durch den Fahrzeugnutzer.

Die Fig. 2 zeigt eine Ausführungsform eines Funktionsablaufs zur Aktivierung eines Spurführungssystems nach einem Start aus einem Ruhezustand 13, d.h. nach einem Fahrzeugstart aus dem Ruhezustand 13. Mit Inbetriebnahme des Fahrzeugs werden alle Steuergeräte geweckt, d.h. eine Recheneinheit 8 bzw. ein Steuergerät des Spurführungssystems wird hochgefahren. Die Inbetriebnahme erfolgt durch Einschalten der Zündung oder eine äquivalenten Handlung. Nach dem Start fährt das Fahrzeug los und zeigt mit dem Symbol 15 zum Zeitpunkt 14 an, dass das Spurführungssystem zur Verfügung steht. Die Bedingungen zum automatischen Lenken sind nun erfüllt, beispielsweise kann die Kamera 11 den Straßenlauf erkennen, die Geschwindigkeit liegt in einem vorgegebenen Bereich etc., so dass ein automatisches Lenken prinzipiell möglich ist.

Zum Zeitpunkt 17 sind die Bedingungen zum automatischen Lenken weiterhin erfüllt, desweiteren hat jetzt der Nutzer das Spurführungssystem eingeschaltet bzw. angefordert, ein Symbol 19 zeigt die Betriebsbereitschaft an. Mit einer ersten graphischen Anzeige 21 wird der Nutzer aufgefordert, das Lenkrad 3 im Bereich der Sensoren 5 zu ergreifen. Bei den Sensoren 5, die durch einen Signalpeak lediglich eine Zustandsänderung detektierten, ist mit Ergreifen eine Annäherung mit anschließender Sensorberührung zu verstehen. Wenn das Lenkrad bereits im Sensorbereich gehalten wird und damit schon berührt ist, dann ist eine Wegbewegung und eine anschließende Zubewegung der Hand mit einer erneuten Berührung eines Sensors 5 erforderlich.

Im Zeitfenster 23 wird überwacht, ob eine derartige Berührung, d.h. die Zubewegung der Hand 7 mit anschließender Berührung zustande kommt oder nicht. Das Zeitfenster 23 definiert eine Zeitdauer beginnend vom Zeitpunkt der Betriebsbereitschaft 17.Tritt nach einer vorgegebenen Zeit nach dem Zeitpunkt 17 die Berührung nicht auf wird nach Erlöschen der ersten graphischen Anzeige 21 eine zweite graphische Anzeige 25 begleitet von einem akustischen Hinweis 26 angezeigt. In vorliegendem Beispiel nach Fig. 2 nimmt der Nutzer die Hand vom Sensorbereich weg, worauf der Sensor 5 das mit einer negativen Flanke beginnende Signal 27 aussendet. Eine Berührung des Sensors 5 nach Annäherung der Hand an das Lenkrad erfolgt erst außerhalb des Zeitfensters 23. Außerhalb des Zeitfensters 23 sendet der Sensor 5 ein Signal mit positiver Flanke 29 und ein Tiggersignal 31 wird an die Recheneinheit 8 des Spurführungssystems geschickt. Die Zeitdauer vom Auftreten der Betriebsbereitschaft 17 bis zum Auftreten des Sensorsignals 29 bzw. des Triggersignals 31 wird ermittelt und mit dem Zeitfenster 23 verglichen. Da die Zeitdauer größer als das Zeitfenster 23 ist wird eine Aktivierung des Spurführungssystems bis zum nächsten Ruhezustand gesperrt, d.h. das Spurführungssystem bleibt deaktivert selbst wenn die Bedingungen zum automatischen Lenken erfüllt sind und der Nutzer die Systemfunktion anfordert. Der Nutzer wird mit einer Meldung 33 über die gesperrte Aktivierung des Spurführungssystems informiert.

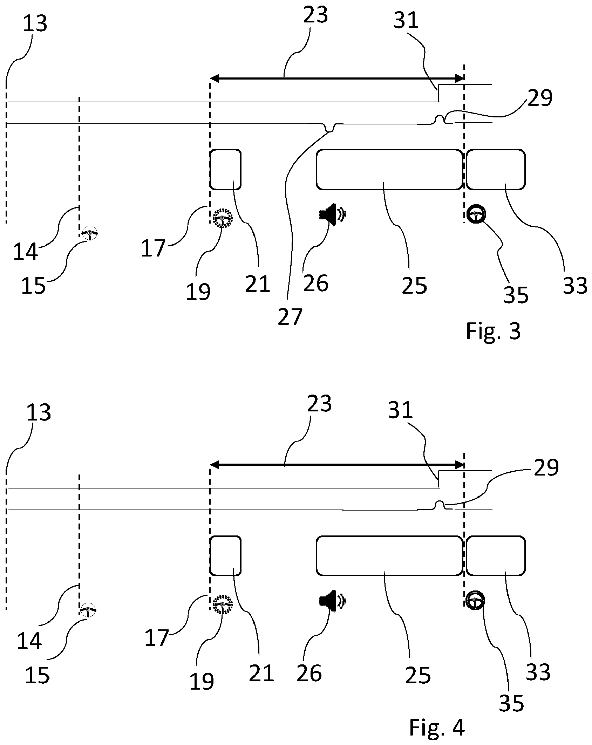

Im Anwendungsfall nach Fig. 3 erfolgt im Unterschied zur Fig. 2 eine Berührung des Sensors 5 nach Annäherung der Hand an das Lenkrad innerhalb des Zeitfensters 23, der Sensor 5 sendet ein Signal mit positiver Flanke 29 und ein Tiggersignal 31 wird innerhalb des Zeitfensters 23 an die Recheneinheit 8 des Spurführungssystems geschickt, worauf das Spurführungssystem aktiviert wird. Der Nutzer wird mit einer Meldung 33 über das aktivierte Spurführungssystem informiert. Das Symbol 35 zeigt dem Nutzer an, dass das Spurführungssystem automatisch lenkt.

In einem weiteren Anwendungsfall nach Fig. 4 erfolgt eine Berührung des Sensors 5 nach Annäherung der Hand an das Lenkrad innerhalb des Zeitfensters 23 ohne vorher die Hand vom Sensor 5 wegzunehmen. Dieser Fall tritt beispielsweise auf, wenn der Nutzer das Lenkrad 3 zuerst außerhalb des Sensorbereichs hält und im Zeitfenster 23 ein Sensor 5 berührt. Der Sensor 5 sendet ein Signal mit positiver Flanke 29 und ein Tiggersignal 31 wird innerhalb des Zeitfensters 23 an die Recheneinheit 8 des Spurführungssystems geschickt, worauf das Spurführungssystem analog der Beschreibung zu Fig. 3 aktiviert wird.

Der Sensor 5 erkennt in den vorangehenden Beispielen nur einen Signalpeak bewirkt durch eine Änderung wie eine Berührung oder Beendigung einer Berührung.

In einer weiteren nicht dargestellten Ausführungsform kann der Sensor 5 zu jedem Zeitpunkt erkennen, ob ein Handanliegesignal vorliegt oder nicht. Liegt die Hand beispielsweise bereits vor dem Zeitpunkt 17 an einem Sensor 5 an, muss der Nutzer im Zeitfenster 23 eine anliegende Hand nicht abheben und wieder auflegen, um die Funktion des Sensors 5 zu bestätigen.

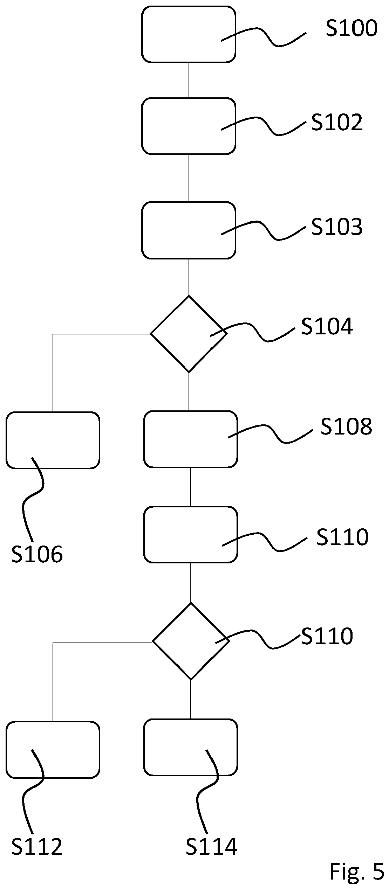

Das in Fig. 5 gezeigte Ablaufverfahren startet im Schritt S100 mit einem Start des Spurführungssystems, das mit einer Änderung des Fahrzeugzustands von einem Ruhezustand in einen fahrbereiten Zustand verbunden ist. Fahrbereit bedeutet, der Fahrer muss zum Fahren lediglich einen Gang einlegen und/oder das Gaspedal treten.

Im Schritt S102 wird erkannt, dass alle Randbedingungen zum automatischen Lenken mit Ausnahme einer Nutzeranforderung erfüllt sind.

Im Schritt S103 wird erkannt, dass der Nutzer eine Funktion des Spurführungssystems angefordert hat, das Spurführungssystem ist damit betriebsbereit. Mit Erreichen der Betriebsbereitschaft ergeht eine Aufforderung an den Fahrzeugnutzer, die Lenkhandhabe 3 im Bereich der Sensoren zu berühren. Im Schritt S104 wird überwacht, ob ab dem Zeitpunkt der Betriebsbereitschaft Aufforderung ein durch die Berührung der Sensoren bewirktes Signal innerhalb des Zeitfensters 23 auftritt oder nicht.

Tritt kein Sensorsignal auf, dann wird die Funktion des Spurführungssystems bis zu einem neuen Start gemäß S100 nach einem Ruhezustand im Schritt S106 gesperrt und der Nutzer informiert. In dem Fall wird davon ausgegangen, dass der Sensor 5 oder die mit dem Sensor verbunden Bauteile zur Übermittlung an die Recheneinheit 8 des Spurführungssystems defekt sind.

Wird ein Sensorsignal im Schritt S104 detektiert, dann wird das Spurführungssystem im Schritt S 108 aktiviert.

Sofern die Randbedingungen zum automatischen Lenken im Schritt S110 nicht mehr erfüllt sind, wird der Nutzer aufgefordert die Fahrzeugführung zu übernehmen. Die Übernahme ist wiederum durch Detektion der Berührung eines der Sensoren 5 am Lenkrad 3 zu bestätigen.

Ergibt eine Überprüfung im Schritt S110, dass innerhalb einem weiteren Zeitfensters nach der Übernahmeaufforderung keine Berührung erfolgt ist, so wird im Schritt S112 ein Nothalt des Fahrzeugs eingeleitet oder eine entsprechende Warnmeldung ausgegeben. Da im Schritt S104 beispielsweise die Funktion des Sensors bestätigt wird, kann bei Ausbleiben des Sensorsignals im Schritt S110 nur ein Unvermögen des Nutzers zur Fahrzeugübernahme ursächlich sein. Wird in dem weiteren Zeitfenster eine Berührung erkannt, kann der Nutzer je nach Betriebszustand das Fahrzeug gemäß Schritt S114 manuell oder mit Unterstützung des Spurführungssystems weiterfahren.

## Patentansprüche

1. Verfahren zum Betrieb eines Fahrzeugspurführungssystems mit einer Lenkhandhabe umfassend einen berührungssensitiven Sensor mit folgenden Schritten:
- Bestimmung einer Zeitdauer vom Zeitpunkt einer Aufforderung des Spurführungssystems an einen Fahrzeugnutzer zur Berührung der Lenkhandhabe bis zum Auftreten eines durch eine Berührung der Lenkhandhabe im Sensorbereich bewirkten Sensorsignals und Vergleich mit einem vorgegebenen Zeitfenster (S104), **gekennzeichnet durch**,
- Sperrung einer Aktivierungsmöglichkeit des Spurführungssystems bei einer erstmaligen Aufforderung zur Berührung der Lenkhandhabe nach einem Ruhezustand für den Fall, dass die bestimmte Zeitdauer größer als das vorgegebenen Zeitfenster ist (S106),
wobei die Aktivierungsmöglichkeit bis zu einem folgenden Ruhezustand gesperrt wird und das Spurführungssystem bis zu dem folgenden Ruhezustand nicht mehr zur Verfügung steht.

2. Verfahren nach Anspruch 1,
**dadurch gekennzeichnet, dass**
eine Freigabe der Aktivierungsmöglichkeit des Spurführungssystems erfolgt für den Fall, dass die bestimmte Zeitdauer kleiner als das vorgegebene Zeitfenster ist (S108).

3. Verfahren nach Anspruch 1 oder 2,
**dadurch gekennzeichnet, dass**
die Aufforderung zur Berührung der Lenkhandhabe mit Eintreten einer Betriebsbereitschaft des Spurführungssystems erfolgt.

4. Verfahren nach einem der Ansprüche 1 bis 3,
**dadurch gekennzeichnet, dass**
der Nutzer optisch, akustisch und/oder haptisch aufgefordert wird die Lenkhandhabe im Sensorbereich zu berühren.

5. Verfahren nach Anspruch 4,
**dadurch gekennzeichnet, dass**
mit Ausbleiben einer Berührung nach einer vorgegebenen Zeitdauer nach Aufforderung des Fahrzeugnutzers erneut optisch und/oder akustisch aufgefordert wird die Lenkhandhabe im Sensorbereich zu berühren.

6. Verfahren nach einem der Ansprüche 1 bis 5,
**dadurch gekennzeichnet, dass**
die Berührung der Lenkhandhabe eine Annäherung eines Bedienelements und eine darauffolgende Berührung des Lenkrads beinhaltet.

7. Verfahren nach einem der Ansprüche 1 bis 6,
**dadurch gekennzeichnet, dass**
der Fahrzeugnutzer über die Sperrung der Aktivierungsmöglichkeit des Spurführungssystems bis zum folgenden Ruhezustand mittels einer grafischen und/oder akustischen Anzeige informiert wird.

8. Spurführungssystem zur Durchführung des Verfahrens nach den Ansprüchen 1 bis 7, mit
einem an einer Lenkhandhabe (3) angeordneten berührungssensitiven Sensor (5), einer Recheneinheit (8), die eine Zeitdauer von einer Aufforderung des Spurführungssystems an einen Fahrzeugnutzer zur Berührung der Lenkhandhabe bis zum Auftreten des durch eine Berührung bewirkten Sensorsignals (29) ermittelt und mit einem vorgegebenen Zeitfenster (23) vergleicht,
**dadurch gekennzeichnet, dass**
die Recheneinheit (8) die Aktivierungsmöglichkeit des Spurführungssystems bei einer erstmaligen Aufforderung zur Berührung der Lenkhandhabe (3) nach einem Ruhezustand sperrt für den Fall, dass die bestimmte Zeitdauer größer als das vorgegebene Zeitfenster (23) ist, wobei die Aktivierungsmöglichkeit bis zu einem folgenden Ruhezustand gesperrt bleibt.

9. Spurführungssystem nach Anspruch 8,
**dadurch gekennzeichnet, dass**
der Sensor als ein kapazitiver, induktiver, resistiver oder als optischer Sensor ausgeführt ist.

## Claims

1. Method for operating a vehicle lane guidance system with a steering handle comprising a touch-sensitive sensor, with the following steps:
- the determination of a duration from the time of a prompt to a vehicle user to touch the steering handle to the occurrence of a sensor signal triggered in the sensor area by touching the steering handle and the comparison to a predetermined time window (S104),
**characterised by**
- the blocking of an activation opportunity of the lane guidance system at a first prompt to touch the steering handle after a passive state in the event that the determined duration is longer than the predetermined time window (S106),
wherein the activation opportunity is blocked up to a following passive state and the lane guidance system is no longer available up to the following passive state.

2. Method according to claim 1,
**characterised in that**
the activation opportunity of the lane guidance system is enabled in the event that the determined duration is shorter than the predetermined time window (S108),

3. Method according to claim 1 or 2,
**characterised in that**
the prompt to touch the steering handle occurs at the occurrence of a state of readiness of the lane guidance system.

4. Method according to any of claims 1 to 3,
**characterised in that**
the user is prompted visually, audibly and/or haptically to touch the steering handle in the sensor area.

5. Method according to claim 4,
**characterised in that**
in the absence of a touch after a predetermined time following the prompt to the vehicle user, there follows a fresh visual and/or audible prompt to touch the steering handle in the sensor area.

6. Method according to any of claims 1 to 5,
**characterised in that**
the touching of the steering handle includes an approach of a control and a subsequent touching of the steering wheel.

7. Method according to any of claims 1 to 6,
**characterised in that**
the vehicle user is informed about the blocking of the activation opportunity of the lane guidance system up to the following passive state by means of a graphic and/or audible indication.

8. Lane guidance system for carrying out the method according to any of claims 1 to 7,
having
a touch-sensitive sensor (5) located at a steering handle (3),
a calculating (8) unit which determines a duration from a prompt of the lane guidance system to a vehicle user to touch the steering handle to the occurrence of a sensor signal (29) caused by a touch and compares it to a predetermined time window (23),
**characterised in that**
the calculating unit (8) blocks the activation opportunity of the lane guidance system at a first prompt to touch the steering handle (3) after a passive state in the event that the determined duration is longer than the predetermined time window (23), the activation opportunity remaining blocked up to a following passive state.

9. Lane guidance system according to claim 8,
**characterised in that**
the sensor is designed as a capacitive, inductive, resistive or optical sensor.

## Revendications

1. Procédé de fonctionnement d'un système de guidage sur une voie pour un véhicule doté d'une manette de direction comprenant un capteur tactile, comprenant les étapes suivantes :
- la détermination d'une période de temps entre leu moment où le système de guidage sur une voie demande à l'utilisateur du véhicule de toucher la manette de direction et l'apparition d'un signal de capteur provoqué par un toucher de la manette de direction dans la zone du capteur et la comparaison avec une fenêtre temporelle prédéfinie (S104),
**caractérisé par**
- le blocage d'une possibilité d'activation du système de guidage sur une voie dans le cas où la période de temps spécifique est supérieure à la fenêtre temporelle (S106) lorsque la manette de direction est demandée pour la première fois après un état de repos,
- la possibilité d'activation étant bloquée jusqu'à un état de repos ultérieur et le système de guidage sur une voie n'est plus disponible jusqu'à l'état de repos ultérieur.

2. Procédé selon la revendication 1,
**caractérisé en ce que**
une libération de la possibilité d'activation du système de guidage sur une voie s'effectue dans le cas où la durée définie est inférieure à la fenêtre temporelle prédéfinie (S108).

3. Procédé selon la revendication 1 ou 2,
**caractérisé en ce que** la demande de contact de la manette de direction s'effectue au moment de l'apparition d'une disponibilité de fonctionnement du système de guidage sur une voie.

4. Procédé selon l'une quelconque des revendications 1 à 3, **caractérisé en ce qu'**il est demandé à l'utilisateur de manière optique, acoustique et/ou haptique de toucher la manette de direction dans la zone de capteur.

5. Procédé selon la revendication 4, **caractérisé en ce qu'**en l'absence d'un contact après une durée prédéfinie après que l'utilisateur a été sollicité, il est à nouveau sollicité optiquement ou acoustiquement pour toucher la manette de direction dans la zone de capteur.

6. Procédé selon l'une quelconque des revendications 1 à 5, **caractérisé en ce que** le toucher de la manette de direction contient une approche d'un élément de fonctionnement et un toucher successif du volant de direction.

7. Procédé selon l'une quelconque des revendications 1 à 6, **caractérisé en ce que** l'utilisateur du véhicule est informé du blocage de la possibilité d'activation du système de guidage sur une voie jusqu'au état de repos suivant au moyen d'un affichage graphique et/ou acoustique.

8. Système de guidage sur une voie pour exécuter le procédé selon les revendications 1 à 7, comprenant un capteur tactile (5) disposé sur une manette de direction (3), une unité de calcul (8) qui détermine une durée d'une sollicitation d'un système de guidage sur une voie à l'intention d'un utilisateur du véhicule à toucher la manette de direction jusqu'à l'apparition du signal de capteur (29) provoqué par un contact et compare avec une fenêtre temporelle prédéfinie (23), **caractérisé en ce que** l'unité de calcul (8) bloque la possibilité d'activation du système de guidage sur une voie lors d'une première sollicitation à toucher la manette de direction (3) après un état de repos dans le cas où la durée définie est supérieure à la fenêtre temporelle prédéfinie (23), la possibilité d'activation demeure bloquée jusqu'à un état de repos ultérieur.

9. Système de guidage de voie selon la revendication 8,
**caractérisé en ce que** le capteur est conçu sous la forme d'un capteur capacitif, inductif, résistif ou comme un capteur optique.
